# FASCICULE DE BREVET EUROPEEN

(11) **EP 2 140 151 B1**
(45) Date de publication et mention de la délivrance du brevet: **27.04.2011**
(21) Numéro de dépôt: 08762040.7
(22) Date de dépôt: 06.02.2008
(51) Int. Cl.: F16B 19/10

(54) **RIVET AVEUGLE HAUTES PERFORMANCES NOTAMMENT POUR FIXATION DE STRUCTURE**
HOCHLEISTUNGSFÄHIGE BLINDNIETVORRICHTUNG, INSBESONDERE ZUR STRUKTURELLEN BEFESTIGUNG
HIGH-PERFORMANCE BLIND RIVET PARTICULARLY FOR STRUCTURAL ATTACHMENT

(30) Priorité: 07.02.2007 FR 0753119
(43) Date de publication de la demande: 06.01.2010
(73) Titulaire: ERIS, 31130 Flourens (FR)
(72) Inventeur: AURIOL, Pierre, F-31130 Flourens (FR); AURIOL, Jean-Marc, F-31130 Flourens (FR)
(74) Mandataire: Richebourg, Michel François
(86) Numéro de dépôt international: PCT/FR2008/050182
(87) Numéro de publication internationale: WO 2008/102094

(56) Documents cités:
- WO-A-01/18408
- US-A- 2 397 111
- US-A- 3 277 771
- US-A- 3 702 088
- US-A- 4 312 613

## Description

### DOMAINE D'APPLICATION DE L'INVENTION

La présente invention a trait au domaine de la fixation par rivet aveugle et notamment aux adaptations permettant d'assurer une fixation de structure dans les meilleures conditions.

### DESCRIPTION DE L'ART ANTÉRIEUR

Il existe dans l'art antérieur des rivets aveugles du type de ceux constitués d'une douille creuse déformable et d'un mandrin sécable se positionnant à l'intérieur de ladite douille. Ce rivet aveugle vient se positionner en traversant des orifices ménagés dans au moins deux pièces à fixer et rendus sensiblement coaxiaux (US 3 277 771 A).

Classiquement, la douille comporte deux extrémités :
- une première extrémité équipée d'une tête préformée pour définir une première surface d'appui sur la surface extérieure d'une première pièce, et
- une deuxième extrémité qui, sous l'action d'une déformation par traction sur le mandrin, vient définir une deuxième surface d'appui sur la surface extérieure de la deuxième pièce.

L'effort de traction a pour effet le rapprochement des deux surfaces d'appui et en conséquence le rapprochement et le serrage entre eux des deux pièces à assembler.

Respectant cette configuration le rivet décrit dans le brevet US 5,030,050 est de type de celui comportant une douille monobloc qui, équipée d'un tête fraisée, est préformée pour se déformer sous l'effort axial de sorte qu'une partie de la douille vienne s'épanouir autour de la partie de douille restée fixe de façon à former une surface d'appui élargie sur la pièce autour de l'orifice.

Les demandeurs ont constaté qu'en proposant une douille en une seule et même pièce, le rivet décrit dans le document US 5,030,050 était limité dans ses applications, puisque la douille est réalisée dans sa totalité dans un matériau acceptant la déformation. En effet, les demandeurs ont notamment constaté qu'un tel rivet aveugle à tête fraisée qui requiert la rupture du mandrin grâce à une gorge prévue à cet effet n'assurait pas une mise en place d'un serrage fort ou d'une tension installée suffisante.

Or, les demandeurs ont relevé un autre inconvénient dans ces rivets qui proposent un sertissage qui a pour fonction de maintenir en position le mandrin et donc de maintenir les pièces serrées. L'inconvénient réside dans le fait que les rainures ou gorges pratiquées dans le mandrin destinées au sertissage de la bague ou de la tête de douille dont est équipé alors le rivet, se déforment lors de la transmission de l'effort de traction. Une déformation de ces gorges a pour conséquence un mauvais sertissage et donc un mauvais serrage. A contrario, si la gorge de rupture est agrandie pour lui permettre de casser bien avant toute déformation des gorges de sertissage, la pose peut ne pas être bonne car la déformation totale de la douille ne peut être garantie.

Un autre inconvénient relevé dans l'utilisation des bagues de sertissage réside dans le jeu qu'elles présentent avec la tige lorsqu'elles ne sont pas au niveau des gorges de sertissage. Ce jeu est en effet préjudiciable au bon centrage des bagues sur la tige.

### DESCRIPTION DE L'INVENTION

Partant de cet état de fait, les demandeurs ont mené des recherches visant à solutionner ce problème de conception de la tige du mandrin de la fixation afin d'autoriser une déformation complète et la casse de la tige sans que les gorges de sertissage ne soient déformées.

Ces recherches ont abouti à la conception d'une fixation de type rivet aveugle obviant aux inconvénients précités et susceptible de s'adapter à tout type de rivet aveugle. De même, un autre objectif de l'invention est de proposer un rivet de fixation de structure garantissant la mise en place d'une tension installée.

Le rivet aveugle de l'invention est du type de celui composé d'une douille creuse accueillant un mandrin comportant :
- à une première extrémité, une tête venant agir sur la douille,
- à une deuxième extrémité, une tige à laquelle s'agrippe un outil pour y imprimer un effort de traction,
- une gorge de rupture qui casse lorsque l'effort de traction atteint une certaine valeur.
Conformément à la caractéristique principale de l'invention, ce rivet est remarquable en ce que
- la géométrie de la gorge de rupture est définie de telle façon que le raccordement entre le fond de gorge et le diamètre extérieur du mandrin est plus progressif du coté tige que du côté tête,
- la tige est préformée d'une pluralité de gorges de sertissage et est dimensionnée de sorte qu'une fois la tige cassée au niveau de la gorge de rupture, une partie des gorges de sertissage dépasse hors de la douille,
- la tige est préformée d'au moins une gorge de fragilisation,
- il comporte une bague de sertissage rapportée venant se sertir sur les gorges de sertissage dépassant hors de la douille au moyen d'un outil équipé d'un nez de pose assurant la traction sur le mandrin à des fins de déformation de la douille et de sertissage de la bague sur le mandrin.

La progressivité du rebord de la gorge de rupture positionnée du côté tige a pour effet d'orienter la déformation du mandrin lors de la traction du côté tige, c'est à dire du côté qui va être retiré. Ainsi, la partie du mandrin participant à la fixation c'est à dire celle accueillant les gorges de sertissage et restant en place est préservée de toute déformation (allongement et déformation radiale) et peut être pleinement exploitée pour garantir la fixation. Les gorges de sertissage ne sont donc pas déformées et remplissent leurs fonctions optimisant la fixation créée.

Dans le souci de garantir l'orientation de la déformation du mandrin et de la cantonner à la partie retirée (après rupture), le mandrin du rivet de l'invention est ménagé d'une ou plusieurs gorges de fragilisation du côté tige à proximité de la gorge de rupture. Cette ou ces gorges de fragilisation compensent la présence de la ou des gorges de sertissage de l'autre côté de la gorge de rupture.

La non-déformation des gorges de sertissage associée à la présence d'une bague de sertissage rapportée va permettre de garantir un rivet conforme à l'invention présentant des performances optimisées en ce qui concerne les caractéristiques mécaniques en traction, cisaillement et en tension installée.

Selon une caractéristique particulièrement avantageuse, la gorge de rupture se décompose en au moins deux troncs de cône reliés par leur petite base pour former le fond de la gorge de rupture, le tronc de cône situé du côté tête présentant un angle plus important que celui du tronc de cône situé du côté tige.

Afin de proposer une fixation susceptible de garantir la présence d'une tension installée, la douille est en plusieurs parties séparées de sorte qu'une première partie de la douille ou bulbe vienne s'épanouir autour d'une autre partie de douille restée fixe de façon à former une surface d'appui élargie sur la pièce autour de l'orifice par lequel le rivet débouche. Afin de proposer une déformation adéquate avec la fixation sur des matériaux susceptibles d'être fragilisés, le bulbe et la partie fixe ou corps de la douille sont préformés de sorte que l'extrémité du bulbe vienne se retourner en s'épanouissant sur le corps pour que la surface venant en contact avec le rivet soit arrondie.

Pour ce faire, selon une caractéristique, la partie mobile séparée qui présente une première extrémité en contact avec la tête du mandrin et une deuxième extrémité en contact avec la partie fixe de la douille, est préformée au niveau de sa deuxième extrémité pour présenter une forme extérieure tronconique et une forme intérieure également tronconique d'angle différent.

Selon une autre caractéristique particulièrement avantageuse de l'invention, les différents éléments constituant la fixation ou le rivet sont réalisés dans des matériaux différents. Cette caractéristique offerte par notamment la séparation en deux parties de la douille permet par exemple d'utiliser un matériau qui accepte une grande déformation pour la partie bulbe et un matériau résistant au cisaillement pour la partie corps.

Afin d'optimiser la formation du bulbe et de proposer une déformation de la partie mobile aussi large possible sans risque de fragilisation, le rivet de l'invention est remarquable en ce que la partie mobile de la douille est équipée d'un insert qui coaxial à la partie mobile de la douille présente une dureté inférieure au matériau de cette partie de douille. La présence de cet insert permet d'augmenter la portée du bulbe sur l'assemblage formé par le rivet.

Un tel bulbe associé au sertissage décrit plus haut, permet d'assurer la présence d'une tension installée et d'obtenir un rivet à très hautes performances mécaniques conformément aux objectifs de l'invention.

Ainsi, la fixation proposée par le rivet est particulièrement efficace et autorise la présence d'une tension installée ou serrage. Le choix des matériaux peut donc être adapté à l'application prévue.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un rivet conforme à l'invention.

### BRÈVE DESCRIPTION DES DESSINS

La figure 1 est un dessin schématique d'une vue en coupe d'un mode de réalisation d'un rivet conforme à l'invention,
La figure 2 est un dessin schématique d'une vue d'un détail de la douille de la figure 1,
La figure 3 est un dessin schématique d'une vue d'un détail du mandrin et de la bague de sertissage de la figure 1,
Les figures 4, 5, 6, 7 et 8 illustrent les différentes étapes de pose du rivet de la figure 1.
Les figures 9 et 10 illustrent le début et la fin de la pose d'un autre mode de réalisation du rivet conforme à l'invention, illustrent les différentes étapes de pose d'un autre mode de réalisation du rivet.

### DESCRIPTION DES MODES DE RÉALISATION PRÉFÉRÉS

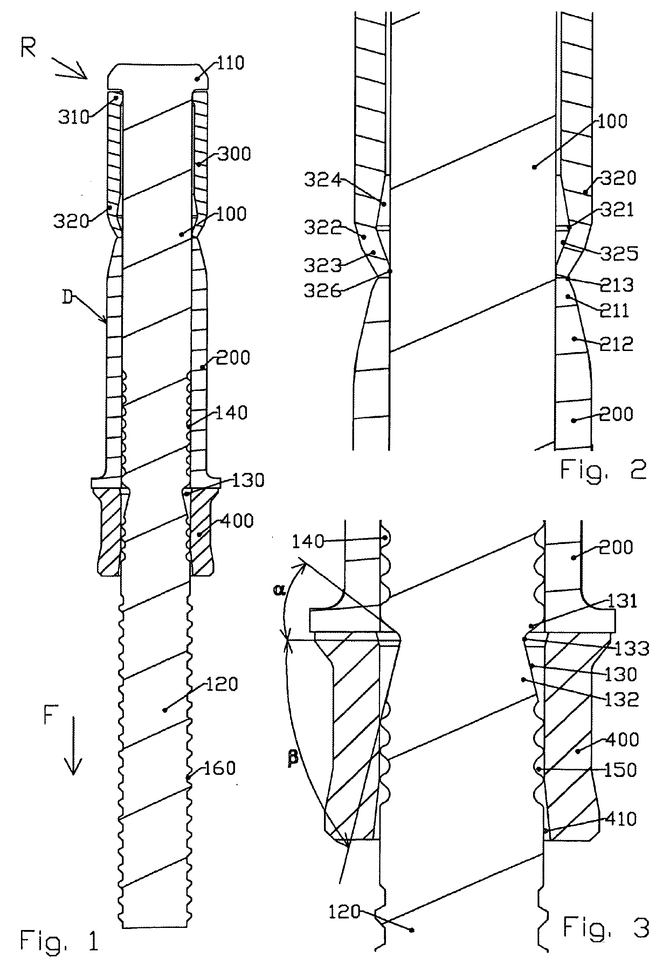

Telle qu'illustrés sur le dessin de la figure 1, la fixation est constituée par le rivet référencé R qui est du type de celui composé d'une douille creuse D et d'un mandrin 100 comportant :
- à une première extrémité, une tête 110 venant agir sur la douille D,
- à une deuxième extrémité, une tige 120 à laquelle s'agrippe un outil 500 pour y imprimer un effort de traction selon la flèche F,
- une gorge de rupture 130 qui casse lorsque l'effort de traction atteint une certaine valeur, et
- une pluralité de gorges de sertissage 140.

Selon le mode de réalisation illustré, la douille D se décompose en deux parties séparées à savoir un corps 200 qui reste fixe et un bulbe 300 qui vient s'épanouir sur ledit corps lors du mouvement de traction imprimé au mandrin 100 selon la flèche F.

Selon ce mode de réalisation, le rivet référencé R se compose de quatre éléments :
- un mandrin 100,
- un corps 200,
- un bulbe 300, et
- une bague de sertissage 400.

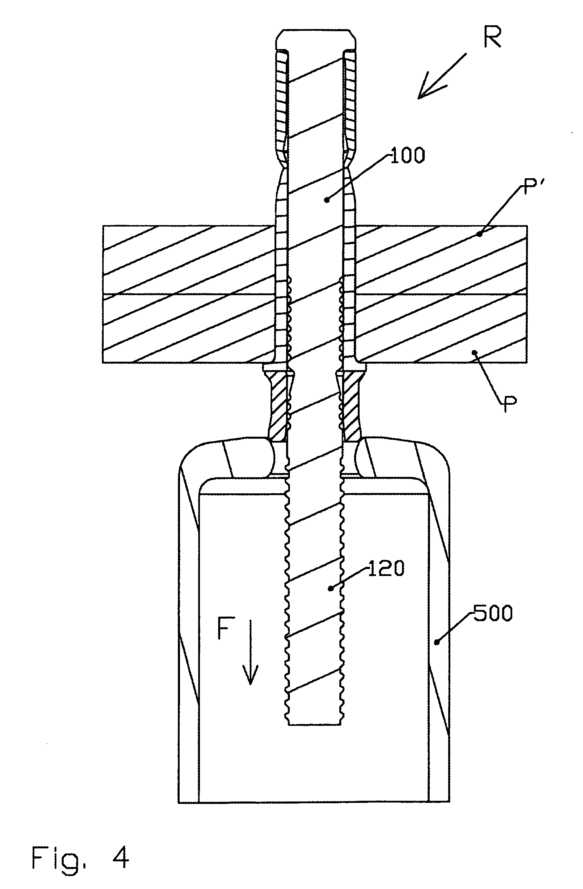

Le procédé de pose du rivet R pour assembler une pièce P à une autre pièce P' schématiquement représentées est illustré par le dessin des figures 4 à 8.

Comme illustré sur le dessin de la figure 4, une fois la tige introduite dans les mors (non illustrés) du nez de pose 500, et le rivet R en appui sur la pièce P, un effort de traction selon la flèche F est imprimé à la tige 110 du mandrin 100.

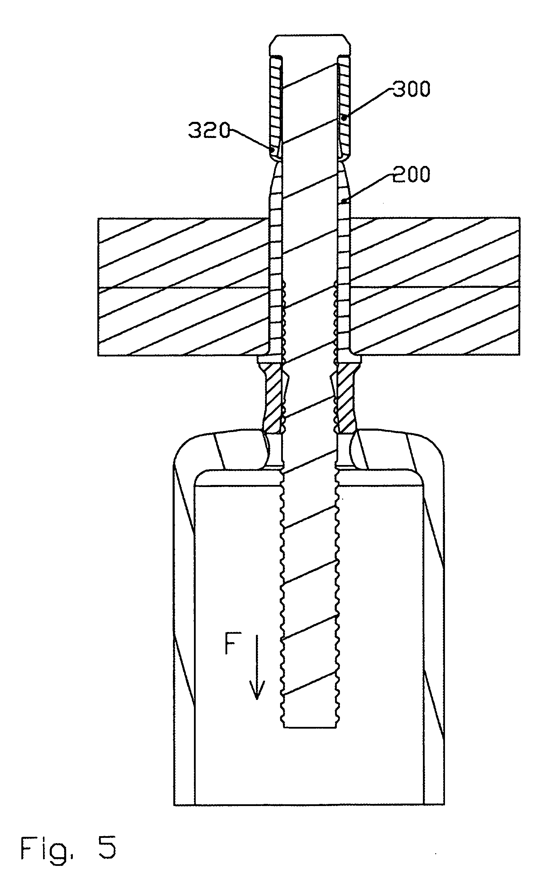

Comme illustré sur la dessin de la figure 5, cette traction a pour effet le retournement du bulbe 300 qui est en appui sur le corps 200 avant que le bulbe ne touche la pièce P' par lequel débouche le rivet R par un orifice prévu à cet effet. Ainsi, le bulbe ne se sert pas de son contact avec la pièce P' à assembler pour se déformer ce qui évite d'endommager la pièce et permet de garantir le retournement du bulbe quelque soit la distance à parcourir. Cette forme enveloppée du bulbe permet également d'avoir un appui plus éloigné du bord de l'orifice pratiqué dans la pièce ce qui permet l'utilisation de la fixation sur des matériaux composites (pas de délaminage des fibres). La tête du mandrin 100 se déplace vers la pièce P' et le bulbe s'épanouit sur le corps en glissant sur ce dernier.

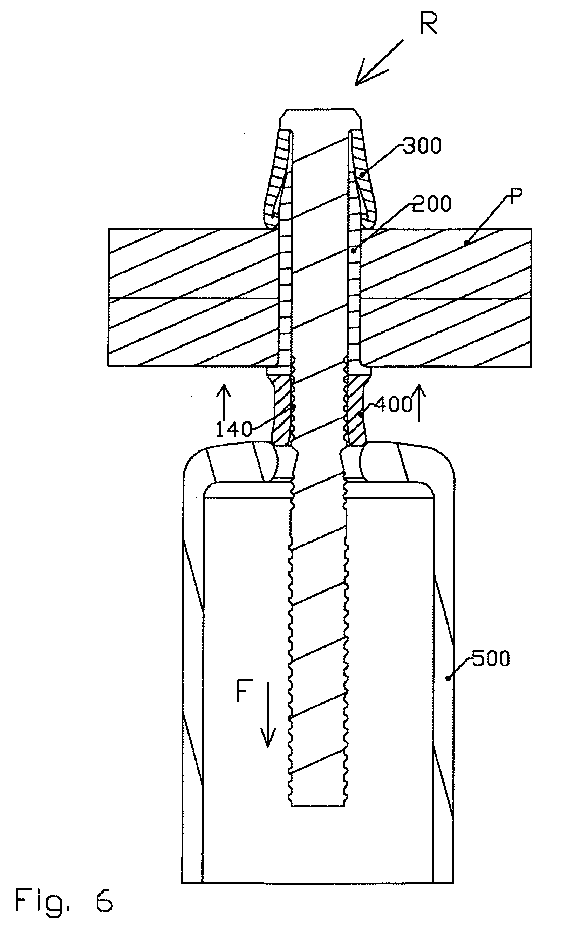

La figure 6 montre le contact du bulbe 300 avec la pièce P' qui définit alors une surface d'appui (bloquant tout mouvement du mandrin 100 dont les gorges de sertissage 140 se sont positionnées hors de la douille au niveau de la bague de sertissage 400) et sur la base de laquelle le nez de pose 500 va venir s'appuyer, pour s'avancer vers la pièce P en déformant la bague 400 à des fins de sertissage. Le rivet de l'invention présente des gorges de sertissage sur une plus grande longueur de la tige que celle dépassant hors de la douille afin de prévoir plusieurs possibilités d'épaisseurs à serrer. Selon un mode de réalisation préféré mais non limitatif, il faut qu'au moins la moitié des gorges de sertissage soit occupée par la matière de la bague pour que les caractéristiques mécaniques recherchées pour ce rivet soient atteintes.

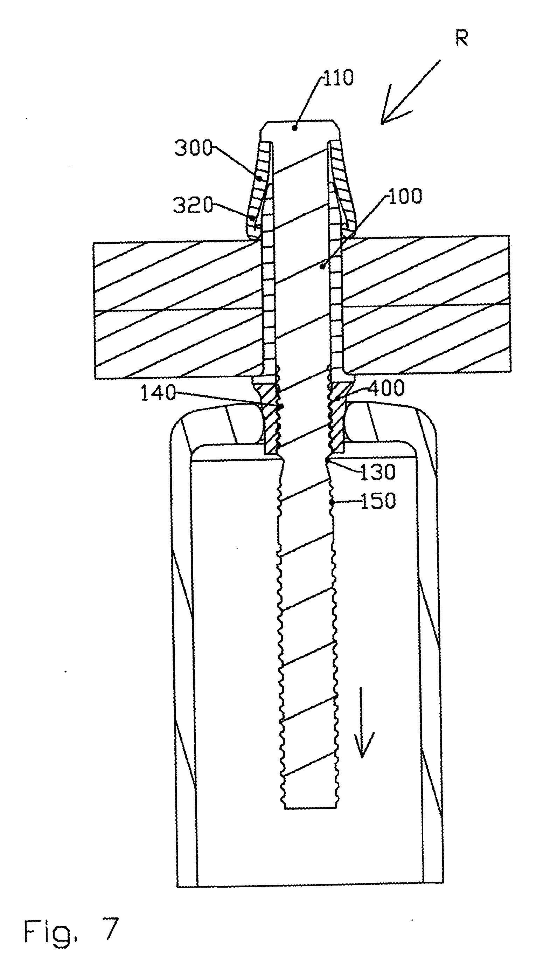

La figure 7 illustre le sertissage de la bague 400 sur les gorges de sertissage 140.

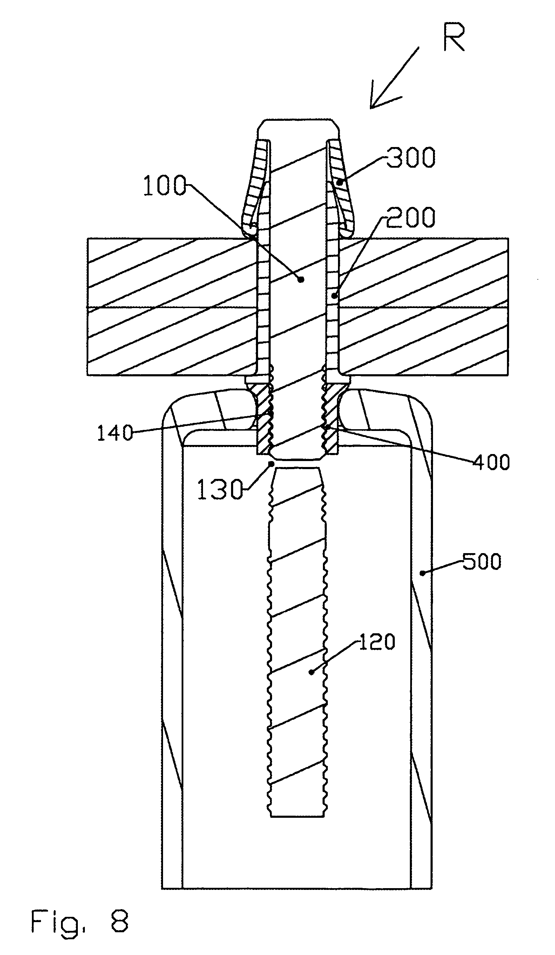

La figure 8 illustre la rupture du mandrin au niveau de la gorge de rupture une fois le bulbe 300 complètement déformé et la bague 400 complètement sertie. Comme illustrée, cette bague vient se sertir autour de l'extrémité restante du mandrin dépassant de la douille sans s'introduire dans ladite douille. En effet, le but de ce sertissage étant d'optimiser les caractéristiques mécaniques, le sertissage doit être réalisé sur un maximum de gorges.

Conformément à l'invention, les caractéristiques structurelles et fonctionnelles des différents éléments constituant le rivet de l'invention ont permis d'optimiser et de garantir le procédé de pose ci-dessus décrit. Ces caractéristique permettent de plus d'obtenir une fixation aveugle de structure posée par traction proposant une tension installée c'est à dire un serrage comparable aux fixations vissées.

Ainsi, conformément à l'invention et comme illustré sur le dessin de la figure 3, la gorge de rupture 130 se décompose en au moins deux troncs de cône 131 et 132 reliés par leur petite base pour former le fond 133 de la gorge de rupture 130, le tronc de cône 131 situé du côté tête 110 présentant un angle plus important que celui du tronc de cône 132 situé du côté tige 120. Ainsi, à partir d'un même diamètre de départ défini par le fond de la gorge de rupture et un même diamètre d'arrivée défini par exemple par le diamètre extérieur du mandrin, le cône côté tige est plus long que celui du côté tête. Comme expliquée plus haut, cette préformation permet d'orienter la déformation du mandrin 100 consécutive à l'effort de traction, du côté tige 120 et de garder ainsi intactes les gorges de sertissage 140. Selon un mode de réalisation préféré, l'angle α pris entre la surface du tronc de cône ouvert 131 avec le plan dans lequel est inscrit la petite base définissant le fond de la gorge de rupture 133 est égal à environ la moitié du même angle β mesuré sur le tronc de cône d'angle plus fermé 132.

Toujours pour orienter la déformation du mandrin vers la partie jetable de la fixation, une pluralité de gorges de fragilisation 150 sont ménagées du côté tige 110 à proximité de la gorge de rupture 130. Selon un mode de réalisation préféré, ces gorges sont réalisées avec le même outillage que pour les gorges de sertissage ce qui permet d'en faciliter la fabrication et de reproduire le même profil. Selon le mode de réalisation préféré illustré, ce profil est semi circulaire. En outre, la présence de gorges 150 usinées à ce niveau du mandrin 100 définit aussi bien une section déformable grâce à leur fond de gorge qu'une section de diamètre plus important de guidage pour la bague de sertissage 400 grâce aux rebords de gorge. En effet, une fois les éléments tubulaires montés sur le mandrin, les gorges de fragilisation 150 sont avantageusement positionnées au niveau de la bague de sertissage et leurs rebords adoptent un diamètre coopérant avec le diamètre de ladite bague 400 pour assurer son guidage. Ce guidage est particulièrement important pour une bonne transmission de l'effort de traction qui est réalisée au moyen des gorges de traction 160 et pour une bonne déformation de la bague de sertissage.

Sur la base d'un mandrin tel que celui qui vient d'être décrit, un mode de réalisation du procédé de fabrication d'un tel rivet R est décrit ci-dessous.

A partir d'une pièce filaire d'une longueur donnée devant former le mandrin 100, une tête 110 est formée par déformation du matériau. Puis la tête et la portion de tige située sous la tête 110 sont usinées sur une longueur donnée pour former une portion cylindrique précise ainsi que des gorges de sertissage 140, de rupture 130 et de fragilisation 150. Les éléments tubulaires à savoir le bulbe 300, le corps 200 et la bague de sertissage 400 sont alors enfilés sur le mandrin 100. La portion de mandrin restée libre, c'est à dire celle non recouverte par les éléments tubulaires est alors préformée par roulage pour former des gorges de traction 160. Cette opération de roulage a pour conséquence une augmentation du diamètre de la portion libre de mandrin 100 qui permet un arrêt axial pour maintenir en position les éléments tubulaires sur le mandrin.

L'utilisation de l'usinage permet de garantir un guidage précis entre le mandrin et les diamètres intérieurs des éléments tubulaires.

Selon une autre caractéristique optimisant la fixation proposée par le rivet de l'invention, la bague de sertissage 400 présente une âme creuse à diamètre évolutif pour s'adapter aux déformations auxquelles elle va être soumise lors de son sertissage (cf. figures 6 et 7). Ainsi, la bague de sertissage 400 présente une âme creuse dont l'extrémité 410 située au niveau de l'extrémité de bague 400 avec laquelle le nez de pose 500 vient en premier en contact, adopte une forme évasée pour proposer un diamètre plus important afin notamment de compenser la sur épaisseur adoptée extérieurement par cette extrémité de bague et éviter ainsi tout endommagement des gorges de sertissage 140.

Selon un mode réalisation préféré mais non limitatif illustré sur le dessin de la figure 3, les gorges de sertissage 140 adoptent un profil semi circulaire. Ce profil permet de garantir la prise en compte des contraintes axiales notamment de tension installée et assure une très grande résistance à l'arrachement axial.

La partie bulbe 300 a également fait l'objet d'une optimisation. Ainsi comme illustrée par le dessin de la figure 2 et conformément à l'invention, la partie mobile séparée dite bulbe 300 qui présente une première extrémité 310 en contact avec la tête 110 du mandrin 100 et une deuxième extrémité 320 en contact avec la partie fixe de la douille D dit corps 200, est préformée au niveau de sa deuxième extrémité 320 pour présenter une zone de pliage 321 grâce à laquelle la matière de la deuxième extrémité du bulbe est susceptible de se déformer, de s'épanouir autour de l'extrémité 210 du corps 200. Plus précisément, cette extrémité 320 de bulbe 300 adoptant une zone de pliage 321 est préformée intérieurement et extérieurement afin de se retourner -comme illustré sur le dessin des figures 5 et 6- sur l'extrémité 210 du corps 200 qui est également préformée à cet effet.

Cette préformation est expliquée en détail ci-après.

La surface extérieure de l'extrémité 320 du bulbe 300 adopte la forme d'un cylindre dont le diamètre se rétrécit progressivement. Selon le mode de réalisation illustré, ce rétrécissement est réalisé par la succession de deux troncs de cône 322 et 323.

La surface intérieure de l'extrémité 320 du bulbe 300 adopte la forme d'un cylindre dont le diamètre s'évase puis se rétrécit. Pour ce faire, l'extrémité de l'âme creuse du bulbe 300 adopte une forme ou se succède un tronc de cône s'évasant 324 puis un tronc de cône 325 se rétrécissant et enfin un cylindre 326 de diamètre inférieur à celui de départ. Avantageusement, la zone de pliage 321 proposée par cette extrémité 320 du bulbe 300 est mise en oeuvre par le fait que la zone de liaison entre les grandes bases des deux troncs de cône 324 et 325 intérieurs se situe dans le même plan que la zone de liaison entre le cylindre extérieur et le tronc de cône extérieur 322 de cette extrémité du bulbe.

Le diamètre intérieur final de cette extrémité est défini pour proposer un ajustement glissant avec le corps du mandrin 100. Cette caractéristique associée au fait que le diamètre intérieur de la première extrémité 310 de bulbe 300 est également définie pour proposer un ajustement glissant avec le mandrin 100, garantit un bon guidage du bulbe dans son mouvement et en conséquence une bonne répartition des contraintes provoquant sa déformation. Cette caractéristique participe à la réalisation d'une fixation de structure optimisée. Il apparaît dans le choix technologique adopté, que la tête du mandrin est la seule surface d'appui axial venant en appui contre la douille. Ainsi, seule la déformation du bulbe requiert une transmission d'effort à travers le mandrin. La casse du mandrin dépend ainsi exclusivement du bon appui du bulbe sur la pièce à serrer. Le rivet aveugle de l'invention permet en conséquence de faire l'objet d'un contrôle de la fixation qu'il propose car une mauvaise fixation aura pour conséquence soit une mise en saillie soit une mise en retrait de l'extrémité restante du mandrin par rapport à la bague de sertissage.

Selon le mode de réalisation préféré illustré, la surface de contact entre l'extrémité 320 du bulbe 300 et l'extrémité 210 du corps 200 est constituée par une surface plane délimitée par les cercles du diamètre extérieur et du diamètre intérieur de cette extrémité. Selon le mode de réalisation illustré, cette surface plane est perpendiculaire à l'axe du mandrin 100 c'est à dire à l'axe de transmission des contraintes. Ainsi, sous l'action dudit effort, le bulbe 300 bute sur le corps 200 et est dans l'obligation de se déformer pour autoriser le déplacement du mandrin 100. De par la zone de pliage avantageusement ménagée dans le bulbe, ce dernier va se plier tout en gardant jusqu'au dernier moment son extrémité plane en appui sur l'extrémité 210 du corps 200, ce qui provoque le retournement de l'extrémité du bulbe afin que ce soit un rebord arrondi qui vienne en contact avec la pièce P' à fixer.

Pour accompagner ce retournement, l'extrémité du corps adopte elle même, à partir de la surface plane de contact avec l'extrémité du bulbe, une forme sensiblement tronconique s'évasant dans le sens de la traction. Plus précisément, l'extrémité 210 présente à partir de la surface transversale de contact une surface extérieure décomposée en deux troncs de cône 211 et 212 successifs et s'évasant dans le sens de la traction. En outre, afin d'éviter qu'une arête de liaison ne provoque un pliage non souhaité, la zone de liaison entre le premier tronc de cône 211 et la surface plane d'appui est constituée par un arrondi 213.

L'âme creuse du corps de douille 200 adopte une forme cylindrique d'un diamètre défini pour réaliser un ajustement glissant avec le mandrin 100.

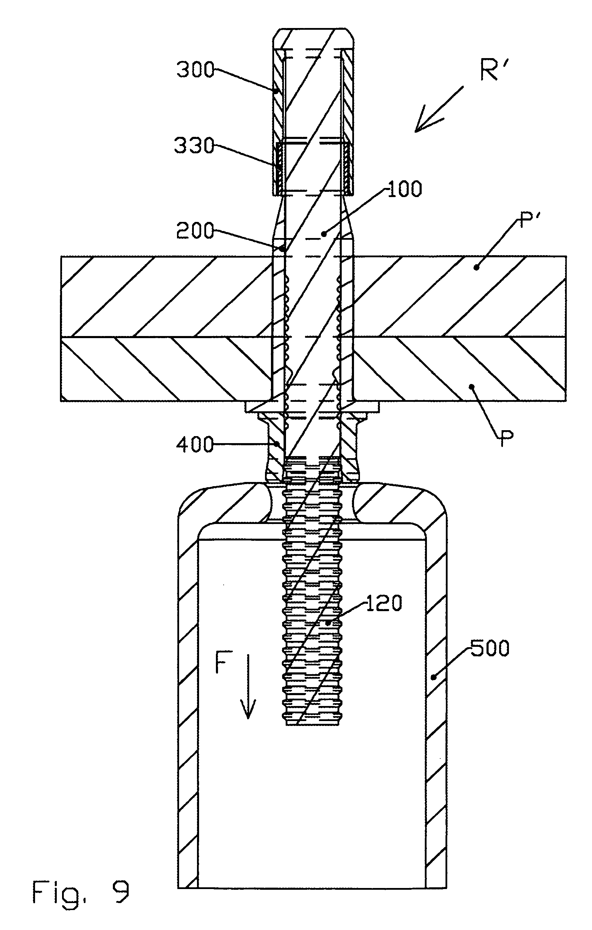

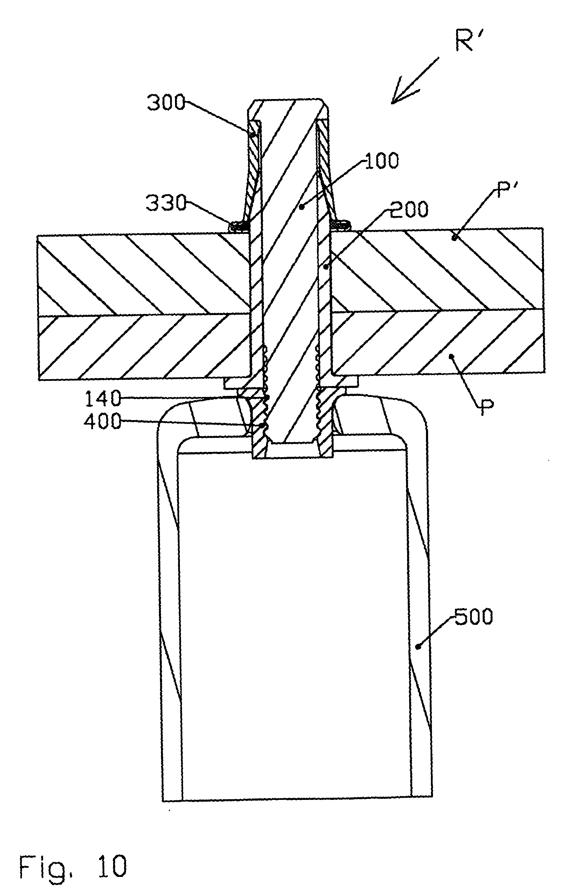

Le mode de réalisation illustré par les figures 9 et 10, montre un autre moyen de créer un bulbe le plus large possible. Dans ce mode de réalisation, le rivet R' est remarquable en ce que la partie mobile 300 de la douille 200 est équipée d'un insert 330 qui coaxial à la partie mobile de la douille 300 présente une dureté inférieure au matériau de cette partie de douille. La présence de cet insert 330 permet d'augmenter la portée du bulbe lors de sa formation sur l'assemblage formé par le rivet R' comme illustré sur le dessin de la figure 10.

On comprend que les rivets, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Rivet aveugle (R) du type de celui composé d'une douille creuse accueillant un mandrin (100) comportant :
- à une première extrémité, une tête (110) venant agir sur la douille (D),
- à une deuxième extrémité, une tige (120) à laquelle s'agrippe un outil (500) pour y imprimer un effort de traction (flèche F),
- une gorge de rupture (130) qui casse lorsque l'effort de traction atteint une certaine valeur,
- la géométrie de la gorge de rupture (130) étant définie de telle façon que le raccordement entre le fond de gorge et le diamètre extérieur du mandrin (100) est plus progressif du coté tige que du côté tête,
**caractérisé par le fait que**
- la tige (120) est préformée d'une pluralité de gorges de sertissage (140) et est dimensionnée de sorte qu'une fois la tige cassée au niveau de la gorge de rupture (130), une partie des gorges de sertissage (140) dépasse hors de la douille (200),
- la tige est préformée d'au moins une gorge de fragilisation (150),
- il comporte une bague de sertissage (400) rapportée venant se sertir sur les gorges de sertissage (140) dépassant hors de la douille (200) au moyen d'un outil (500) équipé d'un nez de pose assurant la traction sur le mandrin (100) à des fins de déformation de la douille (200) et de sertissage de la bague (400) sur le mandrin (100).

2. Rivet (R) selon la revendication 1, **CARACTÉRISÉ PAR LE FAIT QUE** la gorge de rupture (130) se décompose en au moins deux troncs de cône (131 et 132) reliés par leur petite base pour former le fond (133) de la gorge de rupture (130), le tronc de cône (131) situé du côté tête (110) présentant un angle plus important que celui du tronc de cône (132) situé du côté tige (120).

3. Rivet (R) selon la revendication 1 où la douille (D) est en plusieurs parties séparées de sorte qu'une première partie de la douille dite bulbe (300) vienne s'épanouir autour d'une autre partie de douille (D) restée fixe dite corps (200) de façon à former une surface d'appui élargie sur la pièce (P') autour de l'orifice, **CARACTÉRISÉ PAR LE FAIT QUE** le bulbe (300) et la partie fixe ou corps (200) de la douille (D) sont préformés de sorte que l'extrémité du bulbe (320) vienne se retourner en s'épanouissant sur le corps (200) pour que la surface venant en contact avec la pièce (P') soit arrondie.

4. Rivet (R) selon la revendication 1, **CARACTÉRISÉ PAR LE FAIT QUE** la partie mobile (300) séparée qui présente une première extrémité (310) en contact avec la tête (110) du mandrin (100) et une deuxième extrémité (320) en contact avec la partie fixe (200) de la douille (D), est préformée au niveau de sa deuxième extrémité (320) pour présenter une forme extérieure tronconique et une forme intérieure également tronconique d'angle différent.

5. Rivet (R) selon la revendication 1, **CARACTÉRISÉ PAR LE FAIT QUE** la partie mobile (300) de la douille (D) est réalisée dans un matériau différent de celui de la partie fixe (200).

6. Rivet (R) selon la revendication 1, **CARACTÉRISÉ PAR LE FAIT QU'**il comporte une bague de sertissage (400) qui présente une âme creuse dont l'extrémité située au niveau de l'extrémité de bague avec laquelle le nez de pose vient en premier en contact, adopte une forme évasée (410) pour proposer un diamètre plus important.

7. Rivet (R) selon les revendications 1 et 5, **CARACTÉRISÉ PAR LE FAIT QUE** les gorges de fragilisation (150) sont positionnées au niveau de la bague de sertissage (400) et leurs rebords adoptent un diamètre coopérant avec le diamètre de ladite bague (400) pour assurer son guidage.

8. Rivet (R) selon la revendication 1, **CARACTÉRISÉ PAR LE FAIT QUE** la partie mobile (300) de la douille (200) est équipée d'un insert (330) qui coaxial à la partie mobile de la douille (300) présente une dureté inférieure au matériau de cette partie de douille.

## Claims

1. Blind rivet (R) of the type comprised of a hollow sleeve receiving a mandrel (100) comprising:
- at a first end, a head (110) coming to act on the sleeve (D),
- at a second end, a shank (120) to which clutches a tool (500) in order to imprint upon it a traction load (arrow F),
- a breaking groove (130) which breaks off when the traction load reaches a certain value,
- the geometry of the breaking groove (130) being defined in such a way that the connection between the groove bottom and the external diameter of the mandrel (100) is more progressive on the shank side than on the head side,
**CHARACTERIZED BY** THE FACT THAT
- the shank (120) is preformed with a plurality of crimping grooves (140) and is dimensioned in such a way that once the shank broken off on the breaking groove (130), a portion of the crimping grooves (140) extend beyond the sleeve (200),
- the shank is preformed of at least one embrittlement groove (150),
- it comprises an added crimping ring (400) that is urged to crimp on the crimping grooves (140) extending beyond the sleeve (200) by means of a tool (500) provided with an inserting nose providing the traction on the mandrel (100) for the purposes of deformation of the sleeve (200) and of crimping of the ring (400) on the mandrel (100).

2. Rivet (R) according to claim 1, **CHARACTERIZED BY** THE FACT THAT the breaking groove (130) is broken down into at least two truncated cones (131 and 132) connected by their small base in order to form the bottom (133) of the breaking groove (130), the truncated cone (131) located on the head side (110) having an angle that is greater than that of the truncated cone (132) located on the shank side (120).

3. Rivet (R) according to claim 1 wherein the sleeve (D) is in several portions separated in such a way that a first portion of the sleeve referred to as bulb (300) is urged to be opened around another portion of sleeve (D) remaining fixed referred to as body (200) in such a way as to form an extended bearing surface on the part (P') around the orifice, **CHARACTERIZED BY** THE FACT THAT the bulb (300) and the fixed part or body (200) of the sleeve (D) are preformed in such a way that the end of the bulb (320) comes to turn over by opening onto the body (200) so that the surface coming into contact with the part (P') is rounded.

4. Rivet (R) according to claim 1, **CHARACTERIZED BY** THE FACT THAT the separated mobile part (300) which has a first end (310) in contact with the head (110) of the mandrel (100) and a second end (320) in contact with the fixed part (200) of the sleeve (D), is preformed on its second end (320) in order to have a tapered external form and an internal form also tapered with a different angle.

5. Rivet (R) according to claim 1, **CHARACTERIZED BY** THE FACT THAT the mobile part (300) of the sleeve (D) is made from a material that is different from that of the fixed part (200).

6. Rivet (R) according to claim 1, **CHARACTERIZED BY** THE FACT THAT it comprises a crimping ring (400) which has a hollow core of which the end located on the end of the ring with which the inserting nose comes first into contact, adopts an expanded form (410) in order to propose a greater diameter.

7. Rivet (R) according to claims 1 and 5, **CHARACTERIZED BY** THE FACT THAT the embrittlement grooves (150) are positioned on the crimping ring (400) and their edges adopt a diameter that cooperates with the diameter of said ring (400) in order to provide for its guiding.

8. Rivet (R) according to claim 1, **CHARACTERIZED BY** THE FACT THAT the mobile part (300) of the sleeve (200) is provided with an insert (330) which, coaxial to the mobile part of the sleeve (300), has a hardness that is less than the material of this portion of the sleeve.

## Patentansprüche

1. Blindniete (R) des Typs, bestehend aus einer hohlen Hülse, die einen Dorn (100) aufnimmt, umfassend:
- an einem ersten Ende, einen Kopf (110), der auf die Hülle (D) wirkt,
- an einem zweiten Ende, einen Schaft (120), an dem sich ein Werkzeug (500) festhält, um eine Zugkraft darauf auszuüben (Pfeil F),
- eine Brechernut (130), die bricht, wenn die Zugkraft einen bestimmten Wert erreicht,
- wobei die Geometrie der Brechernut (130) so definiert ist, dass die Verbindung zwischen dem Boden der Nut und dem Außendurchmesser des Dorns (100) auf der Seite des Schafts progressiver als auf der Seite des Kopfs ist,
**dadurch gekennzeichnet, dass**
- der Schaft (120) aus einer Vielzahl von Crimprillen (140) vorgeformt und so dimensioniert ist, dass, nachdem der Schaft auf der Ebene der Brechernut (130) gebrochen ist, ein Teil der Crimprillen (140) aus der Hülle (200) herausragt,
- der Schaft aus mindestens einer Schwächungsnut (150) vorgeformt ist,
- er einen aufgesetzten Crimpring (400) umfasst, der auf die Crimprillen (140), die über die Hülse (200) hinausragen, mithilfe eines Werkzeugs (500) gecrimpt wird, das mit einem Mundstück ausgestattet ist, das die Zugkraft auf den Dorn (100) sicherstellt, um die Hülle (200) zu verformen und den Ring (400) auf den Dorn (100) zu crimpen.

2. Niete (R) nach Anspruch 1, **dadurch gekennzeichnet, dass** die Brechernut (130) in mindestens zwei Kegelstümpfe (131 und 132) zerfällt, die durch ihre kleine Bodenfläche verbunden sind, um den Boden (133) der Brechernut (130) zu bilden, wobei der Kegelstumpf (131), der sich auf der Seite des Kopfes (110) befindet, einen größeren Winkel als denjenigen des Kegelstumpfes (132), der sich auf der Seite des Schafts (120) befindet, aufweist.

3. Niete (R) nach Anspruch 1, wobei die Hülle (D) aus verschiedenen getrennten Teilen besteht, so dass sich ein erster Teil der Hülle, genannt Zwiebel (300), um einen anderen, fest gebliebenen Teil der Hülle (D), genannt Körper (200), erweitert, um eine verlängerte Stützfläche auf dem Stück (P') um die Öffnung zu bilden, **dadurch gekennzeichnet, dass** die Zwiebel (300) und der feste Teil des Körpers (200) der Hülle (D) so vorgeformt sind, dass das Ende der Zwiebel (320) sich wendet, in dem es sich auf dem Körper (200) erweitert, damit die Fläche, die mit dem Stück (P') in Kontakt steht, abgerundet ist.

4. Niete (R) nach Anspruch 1, **dadurch gekennzeichnet, dass** der getrennte bewegliche Teil (300), der ein erstes Ende (310) in Kontakt mit dem Kopf (110) des Dorns (100) und ein zweites Ende (320) in Kontakt mit dem festen Teil (200) der Hülle (D) aufweist, auf der Ebene seines zweiten Endes (320) vorgeformt ist, um eine äußere kegelstumpfartige Form aufzuweisen und eine innere, ebenfalls kegelstumpfartige Form mit einem verschiedenen Winkel aufzuweisen.

5. Niete (R) nach Anspruch 1, **dadurch gekennzeichnet, dass** der bewegliche Teil (300) der Hülle (D) aus einem anderen Material als demjenigen des festen Teils (200) besteht.

6. Niete (R) nach Anspruch 1, **dadurch gekennzeichnet, dass** sie einen Crimpring (400) umfasst, der einen hohlen Kern aufweist, dessen Ende, das auf der Ebene des Endes des Rings liegt, mit dem das Mundstück zuerst in Kontakt kommt, eine erweiterte Form (410) annimmt, um einen größeren Durchmesser zu bieten.

7. Niete (R) nach Anspruch 1 und 5, **dadurch gekennzeichnet, dass** die Schwächungsnuten (150) auf der Ebene des Crimprings (400) angeordnet sind und ihre Ränder einen Durchmesser annehmen, der mit dem Durchmesser des Rings (400) zusammenarbeitet, um seine Führung sicherzustellen.

8. Niete (R) nach Anspruch 1, **dadurch gekennzeichnet, dass** der bewegliche Teil (300) der Hülle (200) mit einem Einsatz (330) ausgestattet ist, der, koaxial zum beweglichen Teil der Hülle (300), eine geringere Härte als das Material dieses Teils der Hülle aufweist.
